(19)

**Europäisches Patentamt**
**European Patent Office**
**Office européen des brevets**

(11) **EP 4 451 380 A1**

(12) **EUROPEAN PATENT APPLICATION**
published in accordance with Art. 153(4) EPC

(43) Date of publication:
**23.10.2024 Bulletin 2024/43**

(21) Application number: **23894761.8**

(22) Date of filing: **08.09.2023**

(51) International Patent Classification (IPC):
$H01M\ 4/36$ (2006.01)   $H01M\ 4/583$ (2010.01)
$H01M\ 10/0525$ (2010.01)   $H01M\ 4/38$ (2006.01)
$H01M\ 4/62$ (2006.01)   $H01M\ 4/13$ (2010.01)
$H01M\ 4/02$ (2006.01)

(52) Cooperative Patent Classification (CPC):
H01M 4/02; H01M 4/13; H01M 4/36; H01M 4/38;
H01M 4/583; H01M 4/62; H01M 10/0525;
Y02E 60/10

(86) International application number:
**PCT/KR2023/013536**

(87) International publication number:
**WO 2024/111829 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:
25.11.2022   KR 20220159965
23.12.2022   KR 20220183586
23.12.2022   KR 20220183771
27.12.2022   KR 20220185613
16.05.2023   KR 20230063394
31.05.2023   KR 20230070299
07.06.2023   KR 20230073163
13.06.2023   KR 20230075765

(71) Applicant: **LG Energy Solution, Ltd.**
**Seoul 07335 (KR)**

(72) Inventors:
• **KANG, Da-Young**
**Daejeon 34122 (KR)**
• **KIM, Min-Su**
**Daejeon 34122 (KR)**
• **KIM, Bong-Soo**
**Daejeon 34122 (KR)**
• **YANG, Seung-Bo**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CATHODE FOR LITHIUM-SULFUR BATTERY, AND LITHIUM-SULFUR BATTERY HAVING HIGH-ENERGY-DENSITY CHARACTERISTIC**

(57)   The present disclosure relates to a positive electrode for a lithium-sulfur battery and a lithium-sulfur battery comprising the same, and the positive electrode comprises a porous carbon material having low tap density manufactured by centrifugal milling, thereby achieving high porosity and forming a thick active material layer for the same carbon amount. Accordingly, the positive electrode achieves a lithium-sulfur battery with high energy density.

FIG. 2

**Description**

TECHNICAL FIELD

The present disclosure relates to a lithium-sulfur battery with high energy density.

This application claims the benefit of and priority to Korean Patent Application No. 10-2022-0159965, filed on November 25, 2022, Korean Patent Application No. 10-2022-0183586, filed on December 23, 2022, Korean Patent Application No. 10-2022-0183771, filed on December 23, 2022, Korean Patent Application No. 10-2022-0185613, filed on December 27, 2022, Korean Patent Application No. 10-2023-0063394, filed on May 16, 2023, Korean Patent Application No. 10-2023-0070299, filed on May 31, 2023, Korean Patent Application No. 10-2023-0073163, filed on June 7, 2023, Korean Patent Application No. 10-2023-0075765, filed on June 13, 2023 and Korean Patent Application No. 10-2023-0119939, filed on September 8, 2023, the disclosures of which are incorporated herein by reference in their entirety.

BACKGROUND ART

As energy storage technology has been receiving increasing attention, its range of applications has extended to various devices, including mobile phones, tablets, laptops, camcorders, electric vehicles (EVs) and hybrid electric vehicles (HEVs). Consequently, research and development of electrochemical devices are gradually increasing. In this aspect, electrochemical devices, particularly secondary batteries including lithium-sulfur batteries capable of charge/discharge, are gaining significant attention. Recently, there have been efforts in the development of batteries to enhance capacity density and specific energy through new design of electrodes and batteries.

Among electrochemical devices, lithium-sulfur (LiS) batteries are attracting attention as next-generation secondary batteries that can potentially replace lithium-ion batteries due to their high energy density. In these batteries, lithium-sulfur is used as the positive electrode active materials. During discharging, the reduction reaction of sulfur and the oxidation reaction of lithium metal occur. In this process, sulfur forms lithium polysulfide ($Li_2S_2$, $Li_2S_4$, $Li_2S_6$, $Li_2S_8$) of a linear structure from $S_8$ of a ring structure, and lithium-sulfur batteries exhibit a gradual discharge voltage until the polysulfides (PS) are completely reduced to Li_S.

In lithium-sulfur batteries, using carbon materials with high specific surface area and high porosity, such as, carbon nanotubes, as sulfur hosts, can lead to achieving high energy density and desirable life characteristics. However, additional research is needed to achieve adequate energy density and life characteristics for commercialization.

Attempts have been made to increase the loading of the positive electrode active material, sulfur, in order to increase the energy density. However, as sulfur is nonconductive, increasing the sulfur content results in reduced reactivity and energy density.

SUMMARY

Technical Problem

The present disclosure is directed to providing a lithium-sulfur battery with high loading and high energy density.

It will be easily understood that these and other objectives and advantages of the present disclosure may be realized by means or methods set forth in the appended claims and a combination thereof.

Technical Solution

To solve the above-described problem, according to an aspect of the present disclosure, there is provided a positive electrode of the following embodiments.

The positive electrode according to a first embodiment comprises a current collector; and a positive electrode active material layer on at least one surface of the current collector, wherein the positive electrode active material layer comprises a sulfur-carbon composite and a binder polymer, the sulfur-carbon composite comprises a porous carbon material and a sulfur-based material, and a ratio of a thickness of the positive electrode active material layer to a carbon weight per unit area of the positive electrode active material layer is 80 to 130 $\mu$m/mg.

According to a second embodiment, in the first embodiment, a porosity of the positive electrode active material layer may be 80 vol% or more.

According to a third embodiment, in the first or second embodiment, an amount of elemental sulfur (S) may be 60 wt% or more based on a total weight of the positive electrode active material layer.

According to a fourth embodiment, in any one of the first to third embodiments, the porous carbon material may have an angular particle shape.

According to a fifth embodiment, in any one of the first to fourth embodiments, the porous carbon material may have a particle shape uniformity according to the following Equation 1 of 1.3 or less:

Particle shape uniformity = [an avrage diameter of a circumscribed cicle of particles] / [an average diameter of an inscribed circle of the particles]. [Equation 1]

According to a sixth embodiment, in any one of the first to fifth embodiments, the porous carbon material may be manufactured by milling a raw porous carbon material using a centrifugal mill and filtering the milled porous carbon material through a sieve having a mesh size of 50 $\mu$m to 100 $\mu$m.

According to a seventh embodiment, in any one of the first to sixth embodiments, a tap density of the porous carbon material may be 0.09 g/cm$^3$ or less.

According to an eighth embodiment, in any one of the first to seventh embodiments, a porosity of the positive electrode active material layer may be 81 vol% to 85 vol%.

According to a ninth embodiment, in any one of the first to eighth embodiments, the porous carbon material may comprise a secondary structure formed by agglomeration of carbon nanotubes as primary structures.

According to a tenth embodiment, in any one of the first to ninth embodiments, a tap density of the porous carbon material may be 0.07 g/cm$^3$ or less.

According to an eleventh embodiment, in any one of the first to tenth embodiments, an amount of elemental sulfur (S) may be 65 wt% to 90 wt% based on a total weight of the positive electrode active material layer.

According to a twelfth embodiment, in any one of the first to eleventh embodiments, a loading amount of sulfur (S) may be 2.9 mg$_s$/cm$^2$ or more.

According to another aspect of the present disclosure, there is provided a lithium-sulfur battery of the following embodiments.

The lithium-sulfur battery according to a thirteenth embodiment comprises the positive electrode according to any one of the first to twelfth embodiments, a negative electrode, a separator between the positive electrode and the negative electrode and an electrolyte.

According to a fourteenth embodiment, in the thirteenth embodiment, each of the carbon weight per unit area of the positive electrode active material layer and the thickness of the positive electrode active material layer may be measured after discharging at least once.

According to a fifteenth embodiment, in the thirteenth or fourteenth embodiment, each of the carbon weight per unit area of the positive electrode active material layer and the thickness of the positive electrode active material layer may be measured at a state of charge (SOC) 97% to 100%.

According to a sixteenth embodiment, in any one of the thirteenth to fifteenth embodiments, a weight ratio (El/S weight ratio) of the electrolyte and the sulfur (S) in the sulfur-carbon composite may be 3.5 g/g or less.

According to a seventeenth embodiment, in any one of the thirteenth to sixteenth embodiments, an energy density of the lithium-sulfur battery may be 400 Wh/kg or more.

Advantageous Effects

According to an aspect of the present disclosure, it may be possible to provide the positive electrode for the lithium-sulfur battery with high loading of the positive electrode active material, sulfur, and the lithium-sulfur battery comprising the same. In particular, according to the present disclosure, it may be possible to provide the lithium-sulfur battery with high loading of the positive electrode active material, sulfur, and improved energy density by maintaining and improving electrochemical reactivity of sulfur.

BRIEF DESCRIPTION OF THE DRAWINGS

FIG. 1 is a specific capacity evaluation graph of lithium-sulfur batteries according to Comparative Examples 1, 2 and 4 in the present disclosure.

FIG. 2 is a specific capacity evaluation graph of lithium-sulfur batteries according to Comparative Example 1 and Examples 1 and 2 in the present disclosure.

FIG. 3 is a graph showing the relative energy density of lithium-sulfur batteries according to Examples 1 and 2 and Comparative Examples 1 to 3.

FIG. 4A is a scanning electron microscopy (SEM) image of a porous carbon material used to measure particle shape uniformity of the porous carbon material in Comparative Example 4 in the present disclosure. The crossed arrows on the image represent the long axis and short axis used to measure the length, respectively.

FIG. 4B is an SEM image of a porous carbon material used to measure particle shape uniformity of the porous carbon material used in Example 1 in the present disclosure. The crossed arrows on the image represent the long axis and short axis used to measure the length, respectively.

FIG. 5 is an SEM image (left) showing that the surface of a porous carbon material of Comparative Example 1 is relatively flat and an SEM image (right) showing that the surface of a porous carbon material of Example 1 is relatively rough.

DETAILED DESCRIPTION

Hereinafter, the present disclosure will be described in detail.

The term "include", "comprise" or "have" when used in this specification, specifies the presence of stated elements, but does not preclude the presence or addition of one or more other elements, unless the context clearly indicates otherwise.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout the specification, "A and/or B" refers to either A or B or both.

The term "composite" as used herein refers to a material with physically · chemically different phases and more effective functions, formed by combining two or more materials.

The term "polysulfide" as used herein is the concept that covers "polysulfide ion ($S_x^{2-}$, $1 \leq x \leq 8$)" and "lithium polysulfide ($Li_2S_x$ or $LiS_x^-$, $1 \leq x \leq 8$)".

In the present disclosure, "specific surface area" is measured by the Brunauer, Emmett and Teller (BET) method, and specifically, it may be calculated from the adsorption amount of nitrogen gas under the liquid nitrogen temperature (77K) using BEL Japan's BELSORP-mini II.

In the present disclosure, "particle size $D_{10}$" refers to a particle size at 10% of cumulative volume particle size distribution of particles, "particle size $D_{50}$" refers to a particle size at 50% of cumulative volume particle size distribution of particles, and "particle size $D_{90}$" refers to a particle size at 90% of cumulative volume particle size distribution of particles.

Each of the particle size $D_{10}$, $D_{50}$ and $D_{90}$ may be measured using a laser diffraction method. For example, each of the particle size $D_{10}$, $D_{50}$ and $D_{90}$ may be measured by dispersing a target particle powder in a dispersion medium, introducing into a commercially available laser diffraction particle size measurement instrument (for example, Microtrac MT 3000), irradiating ultrasound of about 28 kHz with an output of 60W to acquire a cumulative volume particle size distribution graph, and determining the particle size corresponding to each of 10%, 50% and 90% of the cumulative volume distribution. That is, for example, the particle size $D_{50}$ represents the median value or median diameter in the particle size distribution graph, and it indicates the particle size at the 50% point on the cumulative distribution. The particle size represents a particle diameter and the particle diameter refers to the longest length within the particle.

The unit "$mAh/g_s$" as used herein indicates the capacity per weight of sulfur (S) unless the context clearly indicates otherwise, and may be interchangeably used with mAh/g(s), mAh/gs or any other form of unit expression.

The unit "$mg_s/cm^2$" as used herein indicates the weight of sulfur (S) per unit area unless the context clearly indicates otherwise, and may be interchangeably used with mg(s)/cm$^2$, mAh/gs or any other form of unit expression.

The term "porosity" as used herein refers to a fraction of voids in a structure over the total volume and is indicated in vol%, and may be used interchangeably with void fraction, degree of porosity or the like. The porosity may be measured according to the method known in the art, *e.g.*, specified in ISO 15901:2019.

The present disclosure provides a positive electrode for use in an electrochemical device and an electrochemical device comprising the same. In the present disclosure, the electrochemical device may include any device that causes electrochemical reaction. Specific examples may include any type of primary battery, secondary battery, fuel cell, solar cell or capacitor such as super capacitor. In particular, the electrochemical device may be a secondary battery, and the secondary battery may be a lithium ion secondary battery. The lithium ion secondary battery may include, for example, a lithium-metal battery, a lithium-sulfur battery, an all solid state battery, a lithium polymer battery or the like, and preferably a lithium-sulfur battery.

It is known that the conventional lithium-sulfur batteries have a low energy density disadvantage. To address the disadvantage, carbon materials having high specific surface area and porosity, for example, carbon nanotubes have been used as hosts for sulfur-based materials to achieve relatively high energy density and life characteristics, but commercialization is still challenging. Additionally, it is necessary to increase the loading of the sulfur-based materials in sulfur-carbon composites included in the positive electrode to increase the energy density of the lithium-sulfur batteries, but since the sulfur-based materials have no or little conductivity, the higher loading, the lower reactivity of the positive electrode.

According to an aspect of the present disclosure, there are provided a positive electrode with improved electrical conductivity in which a sulfur-based material, for example, sulfur ($S_8$) or a sulfur compound is loaded into a shape modified porous carbon material to increase the loading amount of the sulfur-based material, for example, the sulfur ($S_8$) or the sulfur compound and ensure the electrical conductivity in the positive electrode, and a lithium-sulfur battery with improved energy density.

The positive electrode according to an aspect of the present disclosure comprises a current collector and a positive electrode active material layer on at least one surface of the current collector. Specifically, the positive electrode active material layer comprises a sulfur-carbon composite and a binder polymer. Additionally, the sulfur-carbon composite comprises a porous carbon material and a sulfur-based material.

In an embodiment of the present disclosure, the porous carbon material may has a particle shape.

In an embodiment of the present disclosure, the porous carbon material may include irregular pores within the interior (closed pores) and/or on the surface (open pores) of the particles. In this instance, the average diameter of these pores may range from 1 to 200 nm, for example, and the porosity may be between 10 to 90 vol% of the total volume of the porous carbon material. The average diameter of these pores may be measured, for example, using methods such as gas adsorption-based BET measurement or mercury intrusion porosimetry as known in the art.

In an embodiment of the present disclosure, the porous carbon material has a specific range of particle sizes as described below.

In an embodiment of the present disclosure, the sulfur-carbon composite may comprise the porous carbon material and the sulfur-based material, and the sulfur-based material may be loaded and/or coated on all or at least a portion of the inside of the pores and a surface of the porous carbon material.

In an embodiment of the present disclosure, the positive electrode includes the porous carbon material as a host for the active material, and has a small tap density, and thus, has a high porosity. In particular, by loading the active material in the above-described porous carbon material, even when a high content of active materials is included, a passage for movement of substances such as ions in the positive electrode may be sufficiently secured, so that resistance may be lowered and capacity may be improved.

Specifically, in the positive electrode, a ratio of the thickness of the positive electrode active material layer to the carbon weight per unit area in the positive electrode active material layer may be 80 to 130 ($\mu$m/mg).

In an embodiment of the present disclosure, the positive electrode may be characterized in that the porosity of the active material layer is 80 vol% or more.

In an embodiment of the present disclosure, the positive electrode may be characterized in that the amount of elemental sulfur (S) is 60 wt% or more, and specifically 65 wt% or more based on the total weight of the active material layer. In this instance, the elemental sulfur (S) may originate from the sulfur-based material, and in particular, may originate from inorganic sulfur ($S_8$) used to manufacture the sulfur-carbon composite.

In an embodiment of the present disclosure, the positive electrode may be characterized in that the amount of elemental sulfur (S) is 60 wt% or more, and specifically 65 wt% or more based on the total weight of the active material layer, and the porosity is 80 vol% or more.

That is, according to an aspect of the present disclosure, using the shape modified porous carbon material may increase the loading amount of the active material in the positive electrode active material and ensure the porosity of the positive electrode.

The sulfur-based material used as the active material in the lithium-sulfur battery, for example, inorganic sulfur ($S_8$) is a nonconductor. Accordingly, in the conventional lithium-sulfur battery, when the active material, *i.e.*, the sulfur-based material is included too much in the positive electrode active material layer, the resistance in the positive electrode increases, and the reactivity of the positive electrode decreases. Accordingly, it was difficult to include the sulfur-based material in an amount of 60 wt% or more based on the total 100 wt% of the positive electrode active material layer. Specifically, it was difficult to include the elemental sulfur (S) in an amount of 60 wt% or more based on the total 100 wt% of the positive electrode active material layer.

However, the present disclosure implements the ratio of the thickness of the positive electrode active material layer to the carbon weight per unit area of the positive electrode active material layer in the specific range, thereby providing the positive electrode having a larger amount of the active material (*i.e.*, the sulfur-based material) and higher porosity of the active material layer as well as improved reactivity.

As described above, in the positive electrode according to one aspect of the present disclosure, the ratio of the thickness of the positive electrode active material layer to the carbon weight per unit area of the positive electrode active material layer is 80 to 130 $\mu$m/mg. Here, the 'unit area' is 1 cm$^2$ (1 cm $\times$ 1 cm).

In an embodiment of the present disclosure, the ratio of the thickness of the positive active material layer to the carbon weight per unit area of the positive active material layer may be calculated by measuring the carbon weight per 1 cm$^2$ of the positive electrode active material layer, and measuring the thickness of the positive electrode active material layer.

In the present disclosure, each of the carbon weight per unit area of the positive electrode active material layer and the thickness of the positive electrode active material layer may be measured based on an unused fresh cell immediately after the positive electrode is manufactured without being used for an electrochemical reaction. Alternatively, each of the carbon weight per unit area of the positive electrode active material layer and the thickness of the positive electrode active material layer may be measured after the electrode is discharged at least once. In this case, it is preferable that the electrode has a capacity retention rate of 97% or more of the initial capacity, but the present disclosure is not limited thereto.

Specifically, it may be preferable to measure the thickness of the positive electrode active material layer in a charged state in terms of measurement accuracy. For example, it may be measured based on when it is charged after discharging at least once and has a state of charge (SOC) of 97% or higher, for example, SOC 97% to 100%, and specifically, SOC 100%. Alternatively, the carbon weight per unit area of the positive electrode active material layer and the thickness of the positive electrode active material layer may be measured based on a cycle when the thickness of the positive electrode active material layer is the thinnest.

In an embodiment of the present disclosure, the ratio of the thickness of the positive electrode active material layer to the carbon weight per unit area of the positive electrode active material layer may be calculated by calculating the weight of carbon per electrode loading and measuring the thickness of the positive electrode active material layer. Here, the electrode loading may be calculated from the amount of sulfur (S) in the positive electrode according to a known method.

In another embodiment of the present disclosure, the ratio of the thickness of the positive electrode active material layer to the carbon weight per unit area of the positive electrode active material layer may be calculated by a method of directly analyzing the carbon content per unit area of the positive electrode active material layer and a method of measuring the thickness of the electrode. Here, the method of directly analyzing the carbon content per unit area may include, for example, known elemental analysis methods such as ICP-OES analysis, EA analysis, and ICP analysis, but the measurement method is not limited thereto. In addition, the method of measuring the thickness of the electrode may include measuring the thickness of the entire positive electrode using a known thickness meter, for example, a thickness meter of Mitutoyo Co., and subtracting the thickness of the current collector to determine the thickness of the positive electrode active material layer, but the measurement method is not limited thereto.

In an embodiment of the present disclosure, the carbon weight per unit area of the positive electrode active material layer refers to the weight of the total carbon including carbon derived from the sulfur-carbon composite included in the positive electrode active material layer excluding the current collector from the positive electrode to be measured, and carbon derived from a binder and/or a conductive material that may be included in the positive electrode active material layer.

Therefore, in an embodiment of the present disclosure, when the composition of the positive electrode and the amount of the sulfur-based material in the sulfur-carbon composite are known, the carbon weight per unit area of the positive electrode active material layer may be calculated from the loading amount.

Meanwhile, in the lithium-sulfur battery, the thickness of the positive electrode may be variable according to repeated charge/discharge cycles of the battery. Therefore, in order to measure the ratio of the thickness of the positive electrode active material layer to the carbon weight per unit area of the positive electrode active material layer, conditions for the number of charge/discharge cycles and/or the SOC may be required. During discharge of the battery, discharge products are generated inside the structure of the porous carbon material in the positive electrode active material layer, and thus it may be difficult to accurately measure the thickness of the positive electrode without excluding the discharge products. Accordingly, the thickness of the positive electrode active material layer may be measured based on the charged state, for example, when the SOC is 97% to 100%, preferably when the SOC is 100%.

As described above, the positive electrode in which the ratio of the thickness of the positive electrode active material layer to the carbon weight per unit area of the positive electrode active material layer satisfies 80 to 130 $\mu$m / mg may, for example, have the amount of elemental sulfur (S) of 65 wt% or more based on the total 100 wt% of the positive electrode active material layer and the porosity of 80 vol% or more.

In an embodiment of the present disclosure, the ratio of the thickness of the positive electrode active material layer to the carbon weight per unit area of the positive electrode active material layer may be, for example, 80 to 120 $\mu$m / mg, 80 to 110 $\mu$m / mg, 80 to 100 $\mu$m/mg or 83 to 98 $\mu$m/mg. In addition, the ratio of the thickness of the positive electrode active material layer to the carbon weight per unit area of the positive electrode active material layer based on the electrode immediately after manufacture (fresh cell) may be, for example, 90 to 120 $\mu$m/mg or 95 to 119 $\mu$m/mg.

In an embodiment of the present disclosure, the sulfur-based material may include, without limitation, any material that provides sulfur ($S_8$) as the active material of the lithium-sulfur battery. For example, the sulfur-based material comprises at least one of sulfur ($S_8$) or a sulfur compound.

In an embodiment of the present disclosure, the sulfur-based material may comprise inorganic sulfur ($S_8$), $Li_2S_n(n\geq1)$, an organic sulfur compound such as 2,5-dimercapto-1,3,4-thiadiazole and 1,3,5-trithiocyanuic acid, a carbon-sulfur polymer (($C_2S_x)_n$, x is 2.5 to 50, $n\geq2$) or a mixture thereof. Specifically, the sulfur-based material may comprise inorganic sulfur ($S_8$).

In an embodiment of the present disclosure, the sulfur-based material may be included in the sulfur-carbon composite by physical adsorption with the porous carbon material, or chemical bond such as covalent bond or Van der Waals bond between elemental sulfur (S) and carbon in the porous carbon material. In particular, the sulfur-based material may be chemically bonded to the surface of the porous carbon material to form a composite.

In the sulfur-carbon composite according to the present disclosure, the sulfur-based material may be present in at least one of the inside of the pores of the carbon material or the surface of the carbon material, and in this instance, may be present in an area of less than 100% of the inside of the pores and the surface of the carbon material, preferably 1 to 95%, and more preferably 60 to 90%. When sulfur (S) is present on the surface of the carbon material within the above-described range, it may be possible to obtain the maximum effect in terms of electron transport area and electrolyte wetting. Specifically, when sulfur is impregnated onto the surface of the carbon material uniformly to a small thickness at the area of the above-described range, it may be possible to increase the electron transport contact area during charging·discharging. In case that sulfur is present in the area corresponding to 100% of the entire surface of the carbon material, the carbon material is completely covered with sulfur, resulting in poor electrolyte wetting and low contact with a conductive material included in the electrode, thereby failing to accept electrons and participate in reaction.

In an embodiment of the present disclosure, the amount of elemental sulfur (S) may be 60 wt% or more, 65 wt% or more, for example 60 to 100 wt%, 60 to 90 wt%, 65 to 80 wt%, 65 to 75 wt%, 65 to 70 wt%, or 70 to 75 wt% based on the total 100 wt% of the positive electrode active material layer. For example, the amount of elemental sulfur (S) may be 67.2 to 72 wt% based on the total 100 wt% of the positive electrode active material layer. When the amount of elemental sulfur (S) is within the above-described range, it may be possible to improve the capacity of the battery using the same and the stability of the battery, but the present disclosure is not limited thereto.

In an embodiment of the present disclosure, the porous carbon material may have shape modification of porous carbon materials commonly used in the lithium-sulfur battery. Specifically, the porous carbon material may have a particle shape, particularly an angular particle shape. For example, the porous carbon material may have a particle shape having prismoidal sphericity.

As will be described below, the porous carbon material may have a modified particle shape by using a centrifugal mill.

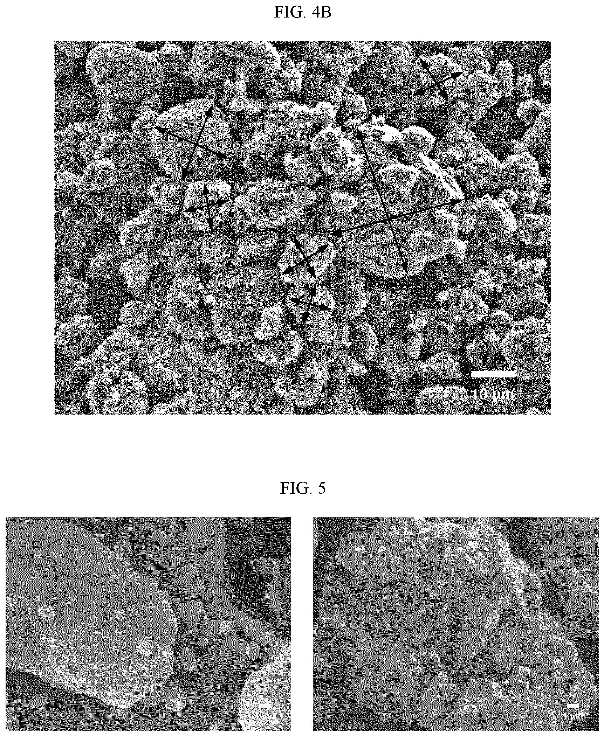

Referring to FIG. 5, it is confirmed that the surface (left) of the porous carbon material pulverized by a jet mill or the like is relatively flat, whereas the surface (right) of the porous carbon material milled by a centrifugal mill is relatively rough. It is confirmed that the porous carbon material on the right has an angular particle shape due to the rough surface characteristics.

Specifically, the porous carbon material may comprise any carbon-based material having pores and conductive properties commonly used in the corresponding technical field. For example, the porous carbon material may comprise at least one selected from the group consisting of graphite; graphene; carbon black including DENKA black, acetylene black, Ketjen black, channel black, furnace black, lamp black, thermal black; carbon nanotubes (CNT) including single-walled carbon nanotubes (SWCNT) and multi-walled carbon nanotubes (MWCNT); carbon fibers including graphite nanofibers (GNF), carbon nanofibers (CNF) and activated carbon fibers (ACF); graphite including natural graphite, artificial graphite and expandable graphite; carbon nanoribbon; carbon nanobelt, carbon nanorod and activated carbon.

In an embodiment of the present disclosure, the porous carbon material may comprise carbon nanotubes. The carbon nanotube is a tube made of carbons connected in hexagonal shape. According to an embodiment of the present disclosure, the carbon nanotubes may be single-walled carbon nanotubes (SWCNT), multi-walled carbon nanotubes (MWCNT) or a combination thereof according to the number of layers of carbon atoms (referred to as 'carbon walls') of which the carbon nanotubes are made. Here, the length of the respective carbon nanotube is not particularly limited.

In an embodiment of the present disclosure, the porous carbon material may comprise carbon nanotubes, and specifically multi-walled carbon nanotubes (MWCNT) to improve the sulfur loading, but the present disclosure is not limited thereto.

In an embodiment of the present disclosure, the porous carbon material may comprise a secondary structure formed by agglomeration of carbon nanotubes as primary structures.

In another embodiment of the present disclosure, the carbon nanotubes may comprise two or more carbon nanotubes entangled in close contact with each other by the cohesive force between them. Specifically, in an embodiment of the present disclosure, the carbon nanotubes may be provided in the form of a carbon nanotube dispersion in which single strands are dispersed in a dispersion medium, or a secondary structure formed by agglomeration of carbon nanotubes of primary structure.

In this aspect, when the porous carbon material comprises carbon nanotubes, the carbon nanotubes may comprise at least one of a bundled secondary structure or an entangled secondary structure.

The bundled secondary structure of carbon nanotubes refers to an agglomerate of primary structures aligned in the lengthwise direction of the carbon nanotubes and bonded by the cohesive force between carbons, each primary structure being a single strand of carbon nanotube, and may be referred to as bundled CNT.

In an embodiment of the present disclosure, the carbon nanotubes may comprise, for example, entangled multi-walled carbon nanotubes.

In an embodiment of the present disclosure, the porous carbon material may have, for example, the BET specific surface area of 150 m$^2$/g or more. In an embodiment of the present disclosure, the BET specific surface area of the porous carbon material may be, for example, 150 to 2500 m$^2$/g, 150 to 2,000 m$^2$/g, 150 to 1,500 m$^2$/g, 150 to 1,000 m$^2$/g, 130 to 300 m$^2$/g, or 170 to 200 m$^2$/g, but is not limited thereto. In the present disclosure, the "specific surface area" is measured by the Brunauer, Emmett and Teller (BET) method, and specifically, it may be calculated from the adsorption amount of nitrogen gas under the liquid nitrogen temperature (77K) using BEL Japan's BELSORP-mini II.

According to an embodiment of the present disclosure, the porous carbon material may be subjected to shape modification by grinding. Specifically, the grinding may involve crushing or shearing of particles. For example, the particles may be crushed or sheared between two blades. In this instance, the grinding applies stimulation to the outer surface of the particles to crush or shear the particles. Additionally, when grinding the particles, the particles may be broken or separated by the friction between the rotating blades of a grinder and the particles.

In general, carbon nanotubes such as single-walled carbon nanotubes (SWCNT) or multi-walled carbon nanotubes (MWCNT) are synthesized using a thermal chemical vapor deposition method or an arc discharge method, and agglomeration occurs between the respective carbon nanotubes particles in the synthesis process. The agglomeration of the carbon nanotubes may be classified into physical agglomeration which is entangled agglomeration of nanotubes as each particle with each other at $\mu$m level, and chemical agglomeration which is agglomeration by surface attraction (~950 meV/nm) such as Van der Waals forces or forces between molecules at nm (nanometer) level like single-walled carbon nanotubes (SWCNT). The agglomeration of the carbon nanotubes may hinder the formation of a 3-dimensional network structure that may improve the mechanical strength and electrical conductivity characteristics. Agglomeration is a common phenomenon appearing in a linear conductive carbon material such as carbon nanotubes. In this context, the present disclosure uses the linear conductive carbon material to manufacture the electrode after disintegration by pre-treatment, for example, grinding, and thus the below-described predetermined tap density range may be satisfied and the filling ratio of the sulfur-based material may be improved.

The porous carbon material of the conventional lithium-sulfur battery was used after it was pre-treated by a jet mill. However, the pre-treatment of the porous carbon material through the jet mill falls short of improving the tap density due to the low particle shape uniformity of the porous carbon material and its smooth particle surface. However, the present disclosure may use the grinder to pre-treat the porous carbon material. Since defects or flaws (for example, tearing) are generated in the respective conductive carbon materials on the surface of the porous carbon material and the conductive carbon materials are separated or loosened, it may be possible to increase the particle shape uniformity of the porous carbon material and improve the surface roughness of the particles. This, in turn, may further increase the sulfur loading and improve the tap density. However, the present disclosure is not limited thereto.

In an embodiment of the present disclosure, the pre-treatment for the shape modification of the porous carbon material may further include a process of sieving using a sieve of a predetermined size after the grinding.

In an embodiment of the present disclosure, the rotational speed of the grinder during the pre-treatment for the shape modification of the porous carbon material may be 10,000 rpm to 25,000 rpm or 15,000 rpm to 20,000 rpm. When the rotational speed of the grinder is within the above-described range, it may be possible to efficiently grind the porous carbon material. However, the rotational speed of the grinder is not limited to the above-described range and those skilled in the art may adjust the rotational speed of the grinder to grind the porous carbon material to the proper extent. In a specific embodiment of the present disclosure, the grinding may be performed using the centrifugal mill, for example, Retsch ZM-200 device.

In an embodiment of the present disclosure, the pre-treatment process for the shape modification of the porous carbon material may include centrifugal milling by grinding at the above-described speed and filtering the particles through the sieve having the size of 50 to 100 $\mu$m, 60 to 100 $\mu$m, or 80 $\mu$m. Accordingly, the porous carbon material may be modified such that the particle size is small and uniform, and a ratio of long axis length and short axis length converges to 1.3 or less, specifically 1, by improving the surface roughness of the particles through the grinding.

In an embodiment of the present disclosure, the particle shape uniformity may be calculated according to the following Equation 1.

Particle shape uniformity = [an average diameter of a circumscribed circle of particles] / [an average diameter of an inscribed circle of the particles]. [Equation 1]

In the above Equation 1, the 'circumscribed circle of particle' refers to a diameter of an imaginary circumscribed circle with a long axis of an arbitrary particle as its diameter, and indicates, in turn, the long axis of the particle.

In the above Equation 1, the 'inscribed circle of particle' refers to a diameter of an imaginary inscribed circle with a short axis of an arbitrary particle as its diameter, and indicates, in turn, the short axis of the particle.

The particle shape uniformity may be calculated from the average value of diameter of circumscribed circle and the average value of diameter of inscribed circle of at least 10 particles.

In an embodiment of the present disclosure, each of the diameter of circumscribed circle and the diameter of inscribed circle of the particles may be measured through analysis on a scanning electron microscopy (SEM) image of the porous carbon material.

In an embodiment of the present disclosure, the porous carbon material may have controlled particle shape to have low tap density by the following pre-treatment method.

In an embodiment of the present disclosure, the porous carbon material may be prepared by milling the raw porous carbon material using the centrifugal mill and filtering the milled porous carbon material using the sieve for a target particle size. In this instance, the mesh size of the sieve may be 2.8 to 4 times of the particle size $D_{50}$ of the prepared porous carbon material, and may be, for example, 50 $\mu$m to 100 $\mu$m.

Conventionally, the porous carbon material has been pulverized using a ball mill, a blade, etc. in order to control the particle size of the porous carbon material. However, the conventional pulverization method has the problem that a porous carbon material with a large particle size and a porous carbon material with a small particle size exist together as the porous carbon material contacts with the ball or the blade randomly, resulting in a broad particle size distribution.

The present disclosure may prepare the porous carbon material by performing the steps of milling the porous carbon material using the centrifugal mill (Step 1) and filtering the milled porous carbon material through the sieve (Step 2).

In an embodiment of the present disclosure, the step (1) may comprise milling while rotating at an angular velocity of 30 to 125 rad/s by using the centrifugal mill. Specifically, the angular velocity may be 30 to 95 rad/s. When the centrifugal milling speed in the step (1) is within the above-described range, it may be advantageous in terms of finely and uniformly controlling the particle size of the porous carbon material while not increasing tap density.

In an embodiment of the present disclosure, the centrifugal mill may include a plurality of rotating teeth, and may mill the porous carbon material while the rotating teeth are rotating. Specifically, the centrifugal mill may include, for example, 2 to 20, 4 to 18, 6 to 16, 8 to 14, 10 to 14, or 10 to 12 rotating teeth.

Furthermore, in an embodiment of the present disclosure, each of the plurality of the rotating teeth may have a shape of a triangular prism, and the plurality of rotating teeth may be arranged to face the rotation axis of the centrifugal mill. Specifically, when viewed from the top of the centrifugal mill along the rotation axis of the centrifugal mill, the plurality of rotating teeth may be arranged such that the edges of the triangular prisms meet at the center of the centrifugal mill.

In an embodiment of the present disclosure, the plurality of rotating teeth may be, for example, made of materials such as stainless steel, titanium, or stainless steel with protective coatings. However, this is not limited thereto.

In an embodiment of the present disclosure, any centrifugal mill having rotating teeth, for example, Retsch ZM 200 device may be used in the step (1).

In an embodiment of the present disclosure, the centrifugal milling may be performed at 6,000 to 18,000 rpm, and the particle size of the porous carbon material may be adjusted in the above-described range. Specifically, the centrifugal milling may be performed using Retsch ZM 200 device at speeds ranging from 6,000 to 23,000 rpm, specifically at speeds of 6,000 to 18,000 rpm.

In an embodiment of the present disclosure, considering that the force applied may vary with the size of the centrifugal mill even at the same RPM, the RPM may be adjusted to grind at the angular velocity of 30 to 125 rad/s according to the following equation, taking into account the size of the centrifugal grinder:

$$\text{Angular Velocity} = (\text{RPM x Circumference}) / 60 \text{ seconds}$$

In the above equation, the 'circumference' represents the distance traveled during one rotation of a rotating tooth.

The step (2) is a step in which the porous carbon material centrifugally milled in the step (1) is filtered through the sieve.

In an embodiment of the present disclosure, the sieve may be equipped in the centrifugal mill, to be specific, on an outer rim of the centrifugal mill. Specifically, the sieve may be equipped to surround the plurality of rotating teeth within the centrifugal mill.

In an embodiment of the present disclosure, the sieve may have a cylindrical shape and be arranged around the plurality of rotating teeth. For example, from the top view of the centrifugal mill, the shortest distance between the plurality of rotating teeth and the sieve may be 0.1 to 5 mm or 0.5 to 2 mm, for example, 1 mm. The sieve may include a mesh having trapezoidal and/or circular holes.

In an embodiment of the present disclosure, as the teeth rotate, the porous carbon material is milled and the porous carbon material with the controlled particle size to the target size is allowed to immediately pass the sieve located outside of the rim where the rotating teeth are arranged under the centrifugal force. Therefore, the issues of further reducing particle size and/or damaging the surface may be prevented. According to an aspect of the present disclosure, performing the steps (1) and (2) simultaneously may achieve the controlled particle size to the target size and obtain the porous carbon material having a narrow particle size distribution.

In this manner, in an embodiment of the present disclosure, it may be advantageous for step (2) to be performed with the centrifugal force applied to the milled porous carbon material.

In the step (2), the porous carbon material centrifugally milled in the step (1) is transferred to and filtered through the sieve. The steps (1) and (2) may be performed by a continuous process.

The particle size of the porous carbon material may be controlled by controlling the mesh size of the sieve used in the step (2). The mesh size of the sieve may be 2.8 to 4 times of the target particle size $D_{50}$ of the porous carbon material ($2.8 \leq$ mesh size/target $D_{50} \leq 4$). When the mesh size of the sieve is limited as described above, the desired $D_{50}$ particle size of the porous carbon material may be achieved and the porous carbon material with a narrow particle size distribution may be obtained.

In an embodiment of the present disclosure, the target particle size $D_{50}$ of the porous carbon material may be, for example, the particle size $D_{50}$ of the porous carbon material manufactured according to an aspect of the present disclosure, and may be, for example, in a range between 10 $\mu$m and 100 $\mu$m, 5 $\mu$m and 90 $\mu$m, 10 $\mu$m and 80 $\mu$m, 15 $\mu$m and 70 $\mu$m, 20 $\mu$m and 60 $\mu$m, 10 $\mu$m and 50 $\mu$m, 15 $\mu$m and 40 $\mu$m, or 20 $\mu$m and 40 $\mu$m.

In the lithium-sulfur battery according to an embodiment of the present disclosure, the porous carbon material preferably has, for example, the tap density of 0.1 g/cm$^3$ or less, or less than 0.1 g/cm$^3$ when measured after tapping a vessel containing the porous carbon material 1000 times. For example, in an embodiment of the present disclosure, the tap density of the porous carbon material may be 0.09 g/cm$^3$ or less. Specifically, the tap density of the porous carbon material may be 0.07 g/cm$^3$ or less. More specifically, the tap density of the porous carbon material may be 0.02 g/cm$^3$ to 0.09 g/cm$^3$, 0.05 g/cm$^3$ to 0.09 g/cm$^3$, or 0.05 g/cm$^3$ to 0.07 g/cm$^3$. When the tap density of the porous carbon material is within the above-described range, it may be possible to increase the loading of the sulfur-based material into the porous carbon material, improve the porosity of the positive electrode, and provide the lithium-sulfur battery with high energy density and high reactivity of the positive electrode, but the present disclosure is not limited thereto.

In the present disclosure, the tap density may be measured in accordance with ASTM B527-06, and may be measured using TAP-2S (LOGAN).

According to an embodiment of the present disclosure, the shape modified porous carbon material may comprise spherical particles having pores on the surface in which the particle shape uniformity according to the following Equation 1 is 1.3 or less. For example, the particle shape uniformity may be 1 to 1.3, 1 to 1.2, or 1 to 1.1.

Particle shape uniformity = [an average diameter of a circumscribed circle of particles] / [an average diameter of an inscribed circle of the particles].  [Equation 1]

In the present disclosure, the particle shape uniformity may be expressed as a ratio of long axis length and short axis length of the particles, *i.e.*, a length ratio of the diameter of the circumscribed circle of the particles and the diameter of the inscribed circle of the particles, and in this instance, as the uniformity is higher, the value may be closer to " 1", and as the uniformity is lower, the value may be farther away from 1.

In an embodiment of the present disclosure, the 'long axis' may represent the longest length of the particle, and preferably, may be measured as the length of the diameter of the circumscribed circle of the particle. Additionally, the 'short axis' may represent the shortest length of the particle, and preferably, may be measured as the length of the diameter of the inscribed circle of the particle.

In the present disclosure, the long axis length (the diameter of the circumscribed circle) of the particle and the short axis length (the diameter of the inscribed circle) may be measured for each particle using an image analyzer, for example, SEM, transmission electron microscopy (TEM), or measured by the known particle size measurement methods.

In an embodiment of the present disclosure, the particle shape uniformity may be measured by imaging a sheet of particles distributed and immobilized in parallel arrangement using a scanning electron microscope (S - 4800, Hitachi High-Technologies Corporation) immediately above the sheet, and analyzing the image using Azokun (Asahi Kasei Engineering Corporation). In this instance, the particle shape uniformity of at least 5 particles, at least 10 particles, for example, 10 to 1,000 particles, 100 to 1000 particles, 10 to 500 particles, or 100 to 500 particles, or 10 particles may be measured, and the average of the measured particle shape uniformity values may be used as the particle shape uniformity of the particles. For example, shape uniformity of 300 particles may be measured, and the average of the measured particle shape uniformity values may be the shape uniformity of all the particles. However, the number of particles used to measure the particle shape uniformity is not limited to the above-described range, and those skilled in the art may select the proper number of particles.

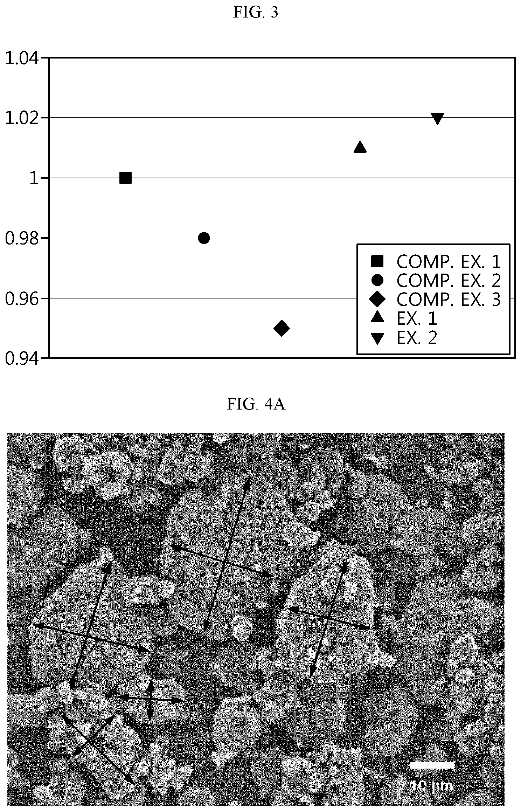

FIGs. 4A and 4B show SEM images (Jeol Inc, 1,000x magnification) used to measure the particle shape uniformity of the porous carbon material according to an embodiment of the present disclosure. According to an embodiment of the present disclosure, the particle shape uniformity may be calculated by measuring the ratio of long axis length and short axis length of at least 5 particles on the image of the porous carbon material and calculating the average.

In an embodiment of the present disclosure, the particle size $D_{50}$ of the shape modified porous carbon material may be, for example, 120 $\mu$m or less, for example, 100 $\mu$m or less, 90 $\mu$m or less, or 80 $\mu$m or less. When the particle size of the porous carbon material satisfies the above-described range, uniformity of the electrode surface may increase, and the cycling life of the battery may improve.

In another embodiment of the present disclosure, the shape modified porous carbon material may have a Broadness Factor (BF) of 7 or less. The broadness factor (BF) as described in this present disclosure may represent a ratio of particle size distribution of particle size $D_{90}$ to particle size $D_{10}$ in the porous carbon material and may be calculated as a value of [particle size $D_{90}$/particle size $D_{10}$].

In the present disclosure the "particle size $D_{10}$" refers to a particle size at 10% of cumulative volume particle size distribution of particles, the "particle size $D_{50}$" refers to a particle size at 50% of cumulative volume particle size distribution of particles, and the "particle size $D_{90}$" refers to a particle size at 90% of cumulative volume particle size distribution of particles.

Each of $D_{10}$, $D_{50}$ and $D_{90}$ may be measured using a laser diffraction method. For example, each of $D_{10}$, $D_{50}$ and $D_{90}$ may be measured by dispersing a powder of particles to be measured in a dispersion medium, introducing into a commercially available laser diffraction particle size measurement instrument (for example, Microtrac MT 3000), irradiating ultrasound of about 28 kHz with an output of 60W to acquire a cumulative volume particle size distribution graph, and determining the particle size corresponding to each of 10%, 50% and 90% of the cumulative volume distribution.

Using the above-described porous carbon material, the positive electrode according to an aspect of the present disclosure may have the porosity of 80 vol% or more, but the mechanism of the present disclosure is not limited thereto.

In an embodiment of the present disclosure, the porosity of the positive electrode may be, for example, 80 vol% to 90 vol%, specifically 80 vol% to 85 vol%, 81 vol% to 85 vol%, or 82 vol% to 83 vol%. When the porosity of the positive electrode is within the above-described range, it may be possible to improve the reactivity of the positive electrode, but the present disclosure is not limited thereto.

In the present disclosure, the porosity of the positive electrode may be, for example, measured by the commonly used Hg porosimeter, and for example, may be measured using a mercury porosimeter (Micromeritics AUTOPORE V). Additionally, the porosity of the positive electrode may be measured by the Brunauer-Emmett-Teller (BET) measurement method using the commonly used adsorption gas such as nitrogen, and for example, may be measured using BEL Japan's BELSORP series analyzer, for example, mini II, but the present disclosure is not limited thereto. The porosity measured by the above-described method may refer to the total volume of pores in the positive electrode. Additionally, the porosity may be measured by calculation from the true density of the constituent materials of the positive electrode, the apparent density of the manufactured positive electrode and the thickness of the positive electrode. Specifically, the porosity may be calculated as a value of [(true density-apparent density)/true density] $\times$ 100(%) of the positive electrode.

Hereinafter, the configuration of the positive electrode of the present disclosure will be described in more detail.

The sulfur-carbon composite may be formed by simply mixing the sulfur-based material with the carbon material, or coating or loading into a core-shell structure. The coating of the core-shell structure may comprise coating any one of the sulfur-based material and the carbon material on the other material, and for example, covering the surface of the carbon material with sulfur or vice versa. Additionally, the loading may comprise filling the sulfur-based material in the carbon material, especially the pores of the carbon material. The sulfur-carbon composite may be available in any form that satisfies the above-described content ratio of the sulfur and the carbon material, and the present disclosure is not limited thereto.

A method for manufacturing the sulfur-carbon composite according to the present disclosure is not limited to a particular one, and the sulfur-carbon composite may be manufactured by a composite forming method known in the art, comprising (S 1) mixing the porous carbon material with the sulfur-based material, and (S2) forming a composite.

The step (S 1) of mixing may be performed by a stirrer commonly used in the art to improve the mixing between the sulfur-based material and the porous carbon material. In this instance, the mixing time and speed may be selectively adjusted according to the amounts and conditions of the raw materials.

The step (S2) of forming the composite may be performed by methods commonly used in the art. The present disclosure is not limited to a particular composite forming method. The commonly used methods, for example, a dry process or a wet process such as spray coating may be used. For example, the mixture of the sulfur and the carbon material obtained after the mixing may be milled by ball milling and placed in an oven of 120 to 160°C for 20 minutes to 1 hour to uniformly coat the molten sulfur on the inside of the first carbon material and the surface of the first carbon material.

In an embodiment of the present disclosure, the sulfur-carbon composite may be manufactured by mixing the porous carbon material and the sulfur-based material in a sequential order, and thermally treating the mixture of the porous carbon material and the sulfur-based material at 120°C, but the manufacturing method is not limited thereto.

In an embodiment of the present disclosure, the sulfur-carbon composite may have the sulfur (S) content of 60 wt% or more, 70 wt% or more or 75 wt% or more, based on 100 wt% of the sulfur-carbon composite. For example, the sulfur-carbon composite may have the sulfur (S) content of 60 wt% to 99 wt%, 65 wt% to 99 wt%, 70 wt% to 99 wt%, 75 wt% to 90 wt%, 70 wt% to 85 wt%, 70 wt% to 80 wt%, or 70 wt% to 75 wt% based on 100 wt% of the sulfur-carbon composite.

In an embodiment of the present disclosure, in addition with the sulfur-carbon composite, the positive electrode active material layer may comprise a binder polymer. Additionally, in addition to the positive electrode active material and the binder resin, the positive electrode active material layer may further comprise a conductive material, if necessary. In this instance, in an embodiment of the present disclosure, the positive electrode active material layer may preferably comprise the positive electrode active material, specifically, the sulfur-carbon composite in an amount of 70 wt% or more, 85 wt% or more, 90 wt% or more or 95 wt% or more based on 100 wt% of the positive electrode active material layer.

In an embodiment of the present disclosure, the positive electrode may have the loading amount of the active material, specifically the loading amount of sulfur (S) of 2.9 $mg_S/cm^2$ or more, and specifically 3.1 $mg_S/cm^2$ or more, but the present disclosure is not limited thereto. According to an aspect of the present disclosure, the above-described characteristics of the porous carbon material and the positive electrode may be advantageous for achieving the high loading electrode.

In an embodiment of the present disclosure, when the loading amount of the positive electrode is converted to capacity, the loading amount may be, for example, 3.5 $mAh/cm^2$ or more, specifically 3.5 $mAh/cm^2$ to 10 $mAh/cm^2$, and more specifically 3.5 $mAh/cm^2$ to 5 $mAh/cm^2$ or 3.5 $mAh/cm^2$ to 4.5 $mAh/cm^2$, but the present disclosure is not limited thereto.

The binder polymer may play a role in attaching the positive electrode active material particles to each other and improving the adhesion strength between the positive electrode active material and the positive electrode current collector, and specific examples may include at least one of polyvinylidenefluoride (PVDF), a vinylidene fluoride-hexafluoropropylene copolymer (PVDF-co-HFP), polyvinylalcohol, polyacrylonitrile, carboxymethyl cellulose (CMC), starch, hydroxypropylcellulose, regenerated cellulose, polyvinylpyrrolidone, polytetrafluoroethylene, polyethylene, polypropylene, ethylenepropylene-diene monomer rubber (EPDM rubber), sulfonated-EPDM, styrene butadiene rubber (SBR), fluoro rubber, or a variety of copolymers thereof. The binder resin may be included in an amount of 1 to 30 wt%, preferably 1 to 20 wt%, and more preferably 1 to 10 wt% based on the total weight of the positive electrode active material layer.

The conductive material may be used to provide conductive properties to the electrode, and may include, without limitation, any conductive material having the ability to conduct electrons without causing any chemical change in the corresponding battery. Specific examples may include at least one of graphite such as natural graphite or artificial graphite; a carbon-based material such as carbon black, acetylene black, Ketjen black, channel black, furnace black, lamp black, thermal black, carbon fibers, carbon nanotubes; metal powder or metal fibers of copper, nickel, aluminum, silver; conductive whiskers of zinc oxide, potassium titanate; conductive metal oxide such as titanium oxide; or conductive polymer such as polyphenylene derivatives. When the conductive material is used, the conductive material may be typically included in an amount of 1 to 30 wt%, preferably 1 to 20 wt%, and more preferably 1 to 10 wt% based on the total weight of the positive electrode active material layer.

In an embodiment of the present disclosure, the positive electrode current collector may include various types of positive electrode current collectors used in the corresponding technical field. For example, the positive electrode current collector may include stainless steel, aluminum, nickel, titanium, sintered carbon or aluminum or stainless steel treated with carbon, nickel, titanium or silver on the surface. The positive electrode current collector may be typically 3 $\mu$m to 500 $\mu$m in thickness, and may have microtexture on the surface to increase the adhesion strength of the positive electrode active material. The positive electrode current collector may come in various forms, for example, a film, a sheet, a foil, a net, a porous body, a foam and a nonwoven.

According to another aspect of the present disclosure, there is provided a lithium-sulfur battery comprising the above-described positive electrode.

Specifically, the lithium-sulfur battery comprises a positive electrode, a negative electrode, a separator interposed between the positive electrode and the negative electrode and an electrolyte, wherein the positive electrode is the above-described positive electrode.

A unit comprising the positive electrode, the negative electrode and the separator may be referred to as an electrode assembly, and for example, the electrode assembly may form a stack type or stack/folding structure including the negative electrode and the positive electrode stacked with the separator interposed between the negative electrode and the positive electrode, or a jelly-roll structure including the negative and positive electrodes and the separator rolled up. Furthermore, in the jelly-roll structure, an additional separator may be placed on the outer side to prevent the contact between the negative electrode and the positive electrode.

The negative electrode may comprise a negative electrode current collector; and a negative electrode active material layer on at least one surface of the negative electrode current collector, and the negative electrode active material layer may comprise a negative electrode active material, and if necessary, further comprise a conductive material and/or a binder.

The current collector, the active material, the conductive material and the binder of the negative electrode may include those commonly used in the lithium-sulfur battery, and the present disclosure is not limited to a particular type.

The separator is disposed between the negative electrode and the positive electrode in the electrode assembly. The separator may separate the negative electrode from the positive electrode and provide movement channels of lithium ions, and may include, without limitation, any type of separator commonly used in the lithium secondary battery.

The electrolyte may include any type of electrolyte available in the lithium-sulfur battery, for example, an organic liquid electrolyte, an inorganic liquid electrolyte, a solid polymer electrolyte, a gel polymer electrolyte, a solid inorganic electrolyte and a molten inorganic electrolyte, but is not limited thereto.

Specifically, the electrolyte may comprise an organic solvent and a lithium salt.

The organic solvent may comprise an ether-based solvent to improve charge/discharge performance of the battery. As a nonaqueous solvent, the ether-based solvent may include at least one of cyclic ether (for example, 1,3-dioxolane, tetrahydrofuran, tetrohydropyran, etc.), a linear ether compound (for example, 1,2 dimethoxyethane, etc.) or low viscosity fluorinated ether (for example, 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, pentafluoroethyl 2,2,2-trifluoroethyl ether, 1H,1H,2'H-perfluorodipropyl ether).

In an embodiment of the present disclosure, the organic solvent may comprise a mixture of 2-methylfuran and dimethoxyethane, and for example, the mixture of 2-methylfuran and dimethoxyethane at a volume ratio (v/v) of 1:9 to 5:5, but is not limited thereto.

The lithium salt may include, without limitation, any compound that provides lithium ions used in the lithium secondary battery. Specifically, the lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$ or $LiB(C_2O_4)_2$. The concentration of the lithium salt may be in a range between 0.1 and 5.0M, and preferably 0.1 and 3.0M. When the concentration of the lithium salt is included in the above-described range, the electrolyte may have proper conductivity and viscosity and exhibit the outstanding electrolyte performance, thereby effectively transporting lithium ions.

In addition to the above-described constituent substances of the electrolyte, the electrolyte may further comprise an additive to improve the life characteristics of the battery, prevent the capacity fading of the battery and improve the discharge capacity of the battery. For example, the additive may include at least one of $LiNO_3$, a haloalkylene carbonate-based compound such as difluoro ethylene carbonate, pyridine, triethylphosphite, triethanolamine, cyclic ether, ethylene diamine, n-glyme, hexamethylphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, but is not limited thereto. The additive may be included in an amount of 0.1 to 10 wt%, and preferably 0.1 to 5 wt% based on the total weight of the electrolyte. In an embodiment of the present disclosure, the additive may comprise $LiNO_3$.

Meanwhile, in an embodiment of the present disclosure, in the lithium-sulfur battery of the present disclosure, a ratio (El/S) of the total weight of the electrolyte to the total weight of elemental sulfur (S) in the positive electrode, specifically, the total weight of elemental sulfur (S) included in the sulfur-carbon composite in the positive electrode may be preferably, for example, 3.5 g/g or less, for example, 3.3 g/g or less, 3.2 g/g or less, or 3.0 g/g or less. Additionally, in the lithium-sulfur battery, the ratio (El/S) of the total weight of the electrolyte to the total weight of elemental sulfur (S) in the positive electrode may be 2.0 to 3.0 g/g/, for example, 2.3 g/g. Using the sulfur-carbon composite according to the present disclosure, it may be possible to realize the lithium-sulfur battery having the above-described range of El/S ratios, thereby improving energy density. However, the lithium-sulfur battery using the sulfur-carbon composite may have higher El/S ratios than the above-described range, and the present disclosure is not limited thereto.

The lithium-sulfur battery is not limited to a particular shape and may come in various shapes, for example, cylindrical, stack and coin shapes.

Additionally, the present disclosure provides a battery module including the lithium-sulfur battery as a unit battery. The battery module may be used as a source of power for medium- and large-scale devices requiring high temperature stability, long cycle life characteristics and high-capacity characteristics.

According to an embodiment of the present disclosure, the lithium-sulfur battery using the above-described positive electrode may have the discharge capacity per weight of sulfur (S) of 1,000 mAh/gs or more, further 1,100 mAh/gs, but the present disclosure is not limited thereto.

According to an embodiment of the present disclosure, the lithium-sulfur battery using the above-described positive electrode may have the energy density of 350 Wh/kg or more, but the present disclosure is not limited thereto. Specifically, the energy density of the lithium-sulfur battery may be 400 Wh/kg or more or 430 Wh/kg or more, and for example, the energy density of the lithium-sulfur battery may be 350 Wh/kg to 500 Wh/kg or 430 Wh/kg to 480 Wh/kg, but the higher energy density of the lithium-sulfur battery, the better performance of the battery, and thus the upper limit of the energy density is not particularly limited.

In an embodiment of the present disclosure, the lithium-sulfur battery may be used in small devices such as mobile phones as well as medium- and large-scale devices, and examples of the medium- and large-scale device may include power tools; electric cars including electric vehicles (EV), hybrid electric vehicles (HEV), plug-in hybrid electric vehicles (PHEV); electric two-wheeled vehicles including E-bikes, E-scooters; electric golf carts; energy storage systems that work using power produced by an electric motor, but is not limited thereto.

In an embodiment of the present disclosure, the lithium-sulfur battery may be a pouch-type, coin-type or cylindrical lithium-sulfur battery, but the type of the lithium-sulfur battery is not limited thereto.

Hereinafter, the present disclosure will be described in more detail through examples, but the following examples are provided by way of illustration, and the scope of the present disclosure is not limited thereto.

<Manufacture of lithium-sulfur battery>

Example 1

Preparation of porous carbon material

Agglomerates of multi-walled carbon nanotubes (Cnano, MWCNT, tap density 0.14 g/cm$^3$, particle shape uniformity 1.52) were prepared. Subsequently, the agglomerates were milled at 18,000 rpm (angular velocity of 94.2 rad/s) using a centrifugal mill (Retsch, ZM-200), and allowed to pass through a sieve having the mesh size of 80 $\mu$m to prepare a shape modified porous carbon material.

The tap density of the modified porous carbon material was 0.07 g/cm$^3$, and the measured particle shape uniformity was 1.07.

In this instance, the tap density was measured after tapping a vessel containing the porous carbon material 1,000 times, and the particle shape uniformity represents a ratio of the average diameter of the circumscribed circle to the average diameter of the inscribed circle of 5 particles through the SEM image (FIG. 4B) of the porous carbon material, and was calculated as a value of [average diameter of circumscribed circle (long axis)/average diameter of inscribed circle (short axis)]. (Measurement 1: 1.01, Measurement 2: 1.06, Measurement 3:1.02, Measurement 4: 1.18, Measurement 5: 1.07).

Manufacture of sulfur-carbon composite

The shape modified porous carbon material obtained as described above and sulfur (S$_8$) were uniformly mixed at a weight ratio of 30:70 (CNT:S$_8$). Subsequently, thermal treatment was performed in an oven of 155°C for 30 minutes to load sulfur into the porous carbon material to manufacture a sulfur-carbon composite.

Manufacture of positive electrode

The sulfur-carbon composite obtained as described above and polyacrylic acid as a binder polymer were added to water and mixed together to prepare a positive electrode slurry. In this instance, a weight ratio of the sulfur-carbon composite and the binder polymer was 96:4. The solids content in the slurry was 27 wt%.

The slurry was coated on an aluminum foil (thickness: 20 $\mu$m) using a Mathis coater and dried at 50°C for 24 hours, followed by rolling to manufacture a positive electrode. The porosity of the manufactured positive electrode active material layer was 83 vol% and the loading amount of the active material was 3.1 mg/cm$^2$. In this instance, the porosity was calculated as a percent of a value obtained by subtracting the density (apparent density) of the positive electrode active material layer excluding the current collector in the manufactured positive electrode from the true density of the constituent materials of the positive electrode active material layer and dividing by the true density.

$$\text{Porosity (vol\%)} = [(\text{true density-apparent density})/\text{true density}] \times 100$$

Manufacture of lithium-sulfur battery

For a negative electrode, a 45 $\mu$m thick lithium metal foil was prepared, and for an electrolyte, 3 wt% of LiNO$_3$ and 0.75M of LiFSI were dissolved in a mixed organic solvent of 2-methylfuran and dimethoxyethane at a volume ratio of 3:7 to prepare a mixed solution.

The positive electrode and the negative electrode manufactured and prepared as described above were placed with a polyethylene separator having the thickness of 16 $\mu$m and porosity of 46 vol% interposed between, and the electrolyte was injected 2.3 times larger than the weight of sulfur (S) in the sulfur-carbon composite used for the positive electrode to manufacture a lithium-sulfur battery (El/S = 2.3 g/g).

Example 2

A lithium-sulfur battery was manufactured by the same method as Example 1 except the weight ratio of the porous carbon material and sulfur was changed to 25:75 (CNT:S$_8$) when manufacturing the sulfur-carbon composite.

In this instance, the porosity of the manufactured positive electrode was 82 vol% and the loading amount of the active material was 3.1 mg/cm$^2$.

Comparative Example 1

Preparation of porous carbon material

Agglomerates of multi-walled carbon nanotubes (Cnano, MWCNT, tap density 0.14 g/cm$^3$, particle shape uniformity 1.52) were prepared. Subsequently, the agglomerates were jet-milled to prepare carbon nanotubes agglomerates having the tap density of 0.1 g/cm$^3$ and the particle shape uniformity of 1.44.

Manufacture of sulfur-carbon composite

The porous carbon material obtained as described above and sulfur were uniformly mixed at a weight ratio of 30:70 (CNTSs). Subsequently, thermal treatment was performed in an oven of 155°C for 30 minutes to load sulfur into the porous carbon material to manufacture a sulfur-carbon composite.

Manufacture of positive electrode and the battery

A lithium-sulfur battery was manufactured by the same method as Example 1 except that the sulfur-carbon composite manufactured as described above was used. In this instance, the porosity of the manufactured positive electrode was 79 vol% and the loading amount of the active material was 3.1 mg/cm$^2$.

Comparative Example 2

A lithium-sulfur battery was manufactured by the same method as Comparative Example 1 except that the weight ratio of the porous carbon material and sulfur was changed to 25:75 (CNT:S$_8$) when manufacturing the sulfur-carbon composite. In this instance, the porosity of the manufactured positive electrode was 78 vol% and the loading amount of the active material was 3.1 mg/cm$^2$.

Comparative Example 3

A lithium-sulfur battery was manufactured by the same method as Comparative Example 1 except that the weight ratio of the porous carbon material and sulfur was changed to 35:65 (CNT:S$_8$) when manufacturing the sulfur-carbon composite. In this instance, the porosity of the manufactured positive electrode was 80 vol% and the loading amount of the active material was 3.1 mg/cm$^2$.

Comparative Example 4

Preparation of porous carbon material

Carbon nanotubes agglomerates having the tap density of 0.2g/cm$^3$ and the particle shape uniformity of 1.44 were prepared without pre-treatment (grinding).
FIG. 4A shows an SEM image of the porous carbon material, and the particle shape uniformity was calculated as a value of [average diameter of circumscribed circle (long axis)/average diameter of inscribed circle (short axis)] of 5 particles on the image. (Measurement 1: 2.06, Measurement 2: 1.26, Measurement 3: 1.37, Measurement 4: 1.36, Measurement 5: 1.16)

Manufacture of sulfur-carbon composite

The porous carbon material obtained as described above and sulfur (S$_8$) were uniformly mixed at a weight ratio of 25:75 (CNT:S$_8$). Subsequently, thermal treatment was performed in an oven of 155°C for 30 minutes to load sulfur into the porous carbon material to manufacture a sulfur-carbon composite.

Manufacture of positive electrode and battery

Subsequently, a lithium-sulfur battery was manufactured by the same method as Comparative Example 1 except that the sulfur-carbon composite manufactured as described above was used. In this instance, the porosity of the manufactured positive electrode was 77 vol%, and the loading amount of the active material was 3.1 mg/cm$^2$.

<Evaluation of physical properties of lithium-sulfur battery>

The characteristics of the lithium-sulfur battery prepared above are summarized in TABLEs 1 and 2 below.

Tap density

According to the ASTM B527 standard method, after putting the porous carbon material used in the manufacture of the sulfur-carbon composite in a test vessel and tapping 1,000 times using a tapping device, the mass (Mass, M) (g) of the porous carbon material to its volume (Vomune, V) (cm$^3$) are measured to measure the tap density.

$$\text{Tap density (TD)} = [M/V]$$

Particle shape uniformity

After obtaining a 1,000x magnification SEM image (S-4800, Hitachi High-Technologies Corporation) of the porous carbon material used in the manufacture of the sulfur-carbon composite above, the long axis length and short axis length of 5 sulfur-carbon composites on the SEM image were measured, and the particle shape uniformity was measured. At this time, the long axis is equal to a diameter of an imaginary circumscribed circle of the particles, and the short axis is equal to a diameter of an imaginary inscribed circle of the particles.

Particle shape uniformity = [(an average diameter of a circumscribed circle of particles) / (an average diameter of an inscribed circle of the particles)].

Sulfur (S$_8$) content in positive electrode active material layer

The mass of sulfur (S$_8$) with respect to the total weight of the positive electrode active material layer was calculated from the mass of sulfur (S8) used to prepare the sulfur-carbon composite and the mass of the sulfur-carbon composite used to prepare the positive electrode active material layer.

Porosity

For the positive electrode prepared above, it was calculated as a percentage of the value obtained by subtracting the density (apparent density) of the positive electrode active material layer excluding the current collector in the manufactured positive electrode from the true density of the materials constituting the positive electrode active material layer and dividing it by the true density.

$$\text{Porosity (vol\%)} = [(\text{true density - apparent density}) / \text{true density}] \times 100$$

Ratio of thickness of positive electrode active material layer to carbon weight per unit area

The ratio based on immediately after manufacture and the ratio based on the battery during operation as the battery was repeatedly charged and discharged were each measured.
First, for a fresh cell immediately after manufacture, the thickness of the positive electrode was measured using a thickness meter (Mitutoyo Co.), and the thickness of the positive electrode active material layer was measured by subtracting the thickness of the current collector from the measured thickness. In addition, the carbon weight (mg/cm$^2$) per unit area (1 cm$^2$) of the positive electrode active material layer was measured by calculating the carbon weight in the positive electrode active material layer from the composition of the positive electrode used in the manufacturing step and dividing by the active material loading amount. In this instance, the calculated value was cross-verified by measuring the carbon weight according to the following method. After removing the current collector from the positive electrode and then conducting ICP-OES (Inductively Coupled Plasma Optical Emission Spectrometry) analysis on the positive electrode active material layer using an elemental analyzer, the carbon weight relative to the total weight of the active material layer was obtained and divided by the area (cm$^2$) of the positive electrode active material layer to be measured to obtain the carbon weight (mg/cm$^2$) per unit area (1 cm$^2$) of the active material layer.

For an operating battery, after measuring the thickness of the positive electrode active material layer in a fully charged (SOC 100%) state in a cycle in which the thickness of the positive electrode active material layer represents the minimum thickness during operation maintaining a capacity of 90% or more compared to the initial capacity for the battery, a ratio of the thickness of the positive electrode active material layer to the carbon weight per unit area measured above was calculated.

TABLE 1

| | Porous carbon material | | Positive electrode active material layer | Positive electrode active material layer |
|---|---|---|---|---|
| | Tap density (g/cm$^3$) | Particle shape uniformity (long axis/short axis) | Sulfur (S$_8$) content (wt%) | Porosity (vol%) |
| Example 1 | 0.07 | 1.07 | 67.2 | 83 |
| Example 2 | 0.07 | 1.07 | 72 | 82 |
| Comparative example 1 | 0.1 | 1.44 | 67.2 | 79 |
| Comparative example 2 | 0.1 | 1.44 | 72 | 78 |
| Comparative example 3 | 0.1 | 1.44 | 62.2 | 80 |
| Comparative example 4 | 0.2 | 1.44 | 72 | 77 |

TABLE 2

| Active material layer thickness to amount of carbon ($\mu$m/mg) (1 cm$^2$ basis) | Fresh cell immediately after manufacture | Operating cell (SOC 100%) |
|---|---|---|
| Example 1 | 95 | 83 |
| Example 2 | 119 | 98 |
| Comparative example 1 | 86 | 76 |
| Comparative example 2 | 95 | 78 |
| Comparative example 3 | 88 | 79 |
| Comparative example 4 | 86 | 69 |

<Specific capacity evaluation of lithium-sulfur battery>

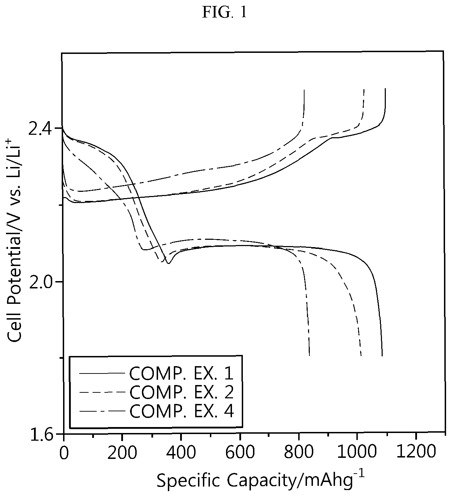

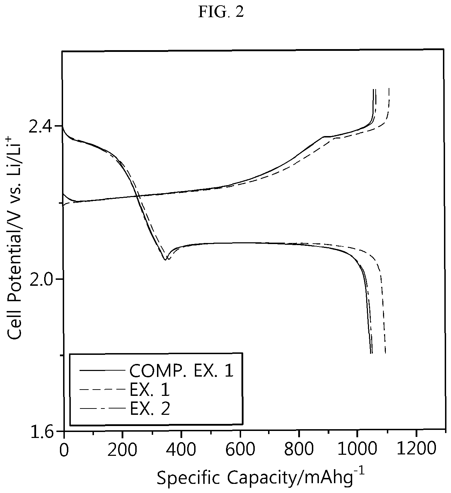

FIG. 1 is a performance evaluation graph of the lithium-sulfur batteries according to Comparative Examples 1, 2 and 4, and FIG. 2 is a performance evaluation graph of the lithium-sulfur batteries according to Examples 1 and 2 and Comparative Example 1.

Each lithium-sulfur battery manufactured in Examples and Comparative Examples was discharged at 0.1C (C-rate) in CC mode (Constant Current mode) at 25°C until 1.8V and charged with 0.1C constant current until 2.5V, and then the discharge capacity was measured. The discharge capacity was measured as discharge capacity (Specific capacity, mAh/g (s)) per sulfur (S) content in the positive electrode.

Referring to FIG. 1, it was confirmed that in the lithium-sulfur battery using the porous carbon material having high tap density and low particle shape uniformity as conventionally, when the sulfur content increased, reactivity reduced and discharge capacity decreased (Comparative Examples 1 and 2). Additionally, it was confirmed that as the density of the porous carbon material increases, reactivity reduced and discharge capacity decreased (Comparative Examples 1 and 4).

Referring to FIG. 2, it was confirmed that the lithium-sulfur battery using the porous carbon material having low tap density and high particle shape uniformity through shape modification had improved reactivity compared to the lithium-sulfur battery using the porous carbon material having the same sulfur content but high tap density and low particle shape uniformity (Example 1 and Comparative Example 1). Additionally, it was confirmed that when the surface modified porous carbon material was used, sulfur loading increased, but reactivity was maintained (Examples 1 and 2).

<Energy density comparison>

The energy density was calculated by measuring the capacity of the lithium-sulfur batteries according to Examples 1 and 2 and Comparative Examples 1 to 3, multiplying the measured capacity by voltage and dividing by the weight of each lithium-sulfur battery, and the results are shown in the following TABLE 3 and FIG. 3. FIG. 3 is a graph showing the relative energy density of the lithium-sulfur batteries according to Examples 1 and 2 and Comparative Examples 1 to 3 to the energy density of Comparative Example 1.

TABLE 3

|  | Energy density (Wh/kg) |
| --- | --- |
| Comparative example 1 | 425 |
| Comparative example 2 | 418 |
| Comparative example 3 | 425 |
| Example 1 | 446 |
| Example 2 | 458 |

In the case of Comparative Examples 1 to 3, i.e., the lithium-sulfur batteries using the porous carbon material having high tap density and low particle shape uniformity as conventionally, it was confirmed that as the sulfur content increases, reactivity reduced and discharge capacity decreased, resulting in low energy density (Comparative Examples 1 and 2). It was confirmed that Comparative Example 3 had high reactivity due to low sulfur loading, but low energy density due to the small amount of the positive electrode active material.

On the other hand, it was confirmed that the lithium-sulfur battery according to Example 1 had improved reactivity and discharge capacity and consequential increased energy density, and Example 2 had higher sulfur content than Example 1 but did not reduce in discharge capacity, and thus had an increase in energy density.

Although the present disclosure has been hereinabove described with regard to a limited number of embodiments and drawings, the present disclosure is not limited thereto, and it is obvious to those skilled in the art that various changes and modifications may be made thereto within the technical aspect of the present disclosure and the appended claims and equivalents thereof.

## Claims

1. A positive electrode, comprising:

    a current collector; and
    a positive electrode active material layer on at least one surface of the current collector,
    wherein the positive electrode active material layer comprises a sulfur-carbon composite and a binder polymer,
    wherein the sulfur-carbon composite comprises a porous carbon material and a sulfur-based material, and
    wherein a ratio of a thickness of the positive electrode active material layer to a carbon weight per unit area of the positive electrode active material layer is 80 to 130 $\mu$m/mg.

2. The positive electrode according to claim 1, wherein a porosity of the positive electrode active material layer is 80 vol% or more.

3. The positive electrode according to claim 1, wherein an amount of elemental sulfur (S) is 60 wt% or more based on a total weight of the positive electrode active material layer.

4. The positive electrode according to claim 1, wherein the porous carbon material has an angular particle shape.

5. The positive electrode according to claim 1, wherein the porous carbon material has a particle shape uniformity according to the following Equation 1 of 1.3 or less:

Particle shape uniformity = [an average diameter of a circumscribed circle of particles] / [an average diameter of an inscribed circle of the particles].          [Equation 1]

6.  The positive electrode according to claim 1, wherein the porous carbon material is manufactured by milling a raw porous carbon material using a centrifugal mill and filtering the milled porous carbon material through a sieve having a mesh size of 50 $\mu$m to 100 $\mu$m.

7.  The positive electrode according to claim 1, wherein a tap density of the porous carbon material is 0.09 g/cm$^3$ or less.

8.  The positive electrode according to claim 1, wherein a porosity of the positive electrode active material layer is 81 vol% to 85 vol%.

9.  The positive electrode according to claim 1, wherein the porous carbon material comprises a secondary structure formed by agglomeration of carbon nanotubes as primary structures.

10. The positive electrode according to claim 1, wherein a tap density of the porous carbon material is 0.07 g/cm$^3$ or less.

11. The positive electrode according to claim 1, wherein an amount of elemental sulfur (S) is 65 wt% to 90 wt% based on a total weight of the positive electrode active material layer.

12. The positive electrode according to claim 1, wherein a loading amount of sulfur (S) is 2.9 mg$_s$/cm$^2$ or more.

13. A lithium-sulfur battery, comprising:

    the positive electrode according to any one of claims 1 to 12;
    a negative electrode;
    a separator between the positive electrode and the negative electrode; and
    an electrolyte.

14. The lithium-sulfur battery according to claim 13, wherein each of the carbon weight per unit area of the positive electrode active material layer and the thickness of the positive electrode active material layer is measured after discharging at least once.

15. The lithium-sulfur battery according to claim 13, wherein each of the carbon weight per unit area of the positive electrode active material layer and the thickness of the positive electrode active material layer is measured at a state of charge (SOC) 97% to 100%.

16. The lithium-sulfur battery according to claim 14, wherein a weight ratio (El/S weight ratio) of the electrolyte and the sulfur (S) in the sulfur-carbon composite is 3.5 g/g or less.

17. The lithium-sulfur battery according to claim 13, wherein an energy density of the lithium-sulfur battery is 400 Wh/kg or more.

FIG. 1

FIG. 2

FIG. 3

FIG. 4A

FIG. 4B

FIG. 5

## INTERNATIONAL SEARCH REPORT

| International application No. |
| --- |
| **PCT/KR2023/013536** |

| A. | CLASSIFICATION OF SUBJECT MATTER |
| --- | --- |

**H01M 4/36**(2006.01)i; **H01M 4/583**(2010.01)i; **H01M 10/0525**(2010.01)i; **H01M 4/38**(2006.01)i; **H01M 4/62**(2006.01)i; **H01M 4/13**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01B 32/168(2017.01); H01M 4/38(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다공성(porous), 황-탄소(carbon-sulfur), 활물질(active material), 바인더(binder), 리튬-황 전지(lithium-sulfur battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2016-0037084 A (LG CHEM, LTD.) 05 April 2016 (2016-04-05)<br> See claims 1 and 12-14, and paragraphs [0035], [0106] and [0110]. | 1-3,7-17 |
| A | | 4-6 |
| A | CN 114551846 A (NATIONAL UNIVERSITY OF DEFENSE TECHNOLOGY) 27 May 2022 (2022-05-27)<br> See claims 1-10. | 1-17 |
| A | KR 10-2020-0032841 A (LG CHEM, LTD.) 27 March 2020 (2020-03-27)<br> See claims 1-9. | 1-17 |
| A | CN 110247047 A (FUZHOU UNIVERSITY) 17 September 2019 (2019-09-17)<br> See claims 1-10. | 1-17 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 December 2023** | **18 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/013536** |

**C.     DOCUMENTS CONSIDERED TO BE RELEVANT**

| Category* | Citation of document, with indication, where appropriate, of the relevant passages | Relevant to claim No. |
| --- | --- | --- |
| A | KR 10-2018-0102406 A (LG CHEM, LTD. et al.) 17 September 2018 (2018-09-17)<br>See claims 1-16. | 1-17 |

**INTERNATIONAL SEARCH REPORT**
Information on patent family members

International application No.

**PCT/KR2023/013536**

| Patent document cited in search report | | | Publication date (day/month/year) | Patent family member(s) | | | Publication date (day/month/year) |
|---|---|---|---|---|---|---|---|
| KR | 10-2016-0037084 | A | 05 April 2016 | KR | 10-1737217 | B1 | 11 May 2017 |
| CN | 114551846 | A | 27 May 2022 | None | | | |
| KR | 10-2020-0032841 | A | 27 March 2020 | CN | 112204771 | A | 08 January 2021 |
| | | | | EP | 3767714 | A1 | 20 January 2021 |
| | | | | JP | 2021-517547 | A | 26 July 2021 |
| | | | | JP | 7110388 | B2 | 01 August 2022 |
| | | | | KR | 10-2021-0082141 | A | 02 July 2021 |
| | | | | KR | 10-2293892 | B1 | 24 August 2021 |
| | | | | US | 11362325 | B2 | 14 June 2022 |
| | | | | US | 11757091 | B2 | 12 September 2023 |
| | | | | US | 2021-0143406 | A1 | 13 May 2021 |
| | | | | US | 2023-0013446 | A1 | 19 January 2023 |
| | | | | WO | 2020-060132 | A1 | 26 March 2020 |
| CN | 110247047 | A | 17 September 2019 | CN | 110247047 | B | 07 June 2022 |
| KR | 10-2018-0102406 | A | 17 September 2018 | CN | 109565042 | A | 02 April 2019 |
| | | | | CN | 109565042 | B | 11 March 2022 |
| | | | | EP | 3435452 | A1 | 30 January 2019 |
| | | | | EP | 3435452 | B1 | 20 July 2022 |
| | | | | ES | 2926298 | T3 | 25 October 2022 |
| | | | | HU | E059868 | T2 | 28 January 2023 |
| | | | | JP | 2019-513673 | A | 30 May 2019 |
| | | | | JP | 6732298 | B2 | 29 July 2020 |
| | | | | KR | 10-2126250 | B1 | 24 June 2020 |
| | | | | PL | 3435452 | T3 | 05 December 2022 |
| | | | | US | 11038194 | B2 | 15 June 2021 |
| | | | | US | 2019-0123377 | A1 | 25 April 2019 |
| | | | | WO | 2018-164413 | A1 | 13 September 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220159965
- KR 1020220183586
- KR 1020220183771
- KR 1020220185613
- KR 1020230063394
- KR 1020230070299
- KR 1020230073163
- KR 1020230075765
- KR 1020230119939